# EUROPEAN PATENT APPLICATION

(11) **EP 4 819 009 A1**
(43) Date of publication of application: **07.10.2026**
(21) Application number: 26159043.4
(22) Date of filing: 17.02.2026
(51) Int. Cl.: G06Q 10/30, G06Q 10/20, H04M 1/24

(54) **ELECTRONIC DEVICE LOGISTICS, GRADING, CLEARING, AND TESTING SYSTEM**

(30) Priority: 02.04.2025 US 202563782109 P; 28.11.2025 US 202519403383
(71) Applicant: Communications Test Design, Inc., West Chester, PA 19380 (US)
(72) Inventor: PARSONS, Mark, Pennsylvania (US); PATEL, Krutarth, Pennsylvania, 19380 (US); JOSEPH, Thomas Pulickal, Pennsylvania, 19380 (US); CANAVATI, George, Pennsylvania, 19380 (US); DEVATT, Roy, Pennsylvania, 19380 (US); KNOTT, William, Pennsylvania, 19380 (US); DOMSOHN, Jaclyn, Pennsylvania, 19380 (US); DHADUTI, Kshama, Pennsylvania, 19380 (US); DAVIS, Nidhin, Pennyslvania, 19380 (US)
(74) Representative: Purdylucey Intellectual Property

(57) **Abstract**

An electronic device logistics, grading, clearing, and testing system is shown and described. The system includes an entry point for receiving devices and a routing table that directs each device to different stations based on its condition and processing needs. These stations include a pre-grading station to check for significant damage, a memory wipe station to clear data, a cleaning station to remove debris and labels, a labeling station to apply new identifiers, a grading station to assess the device's condition, and a functional testing station to check components like the screen, buttons, speakers, and cameras. After testing, the system prepares the device for exit by removing any connectors, then organizes it for shipment or further handling. The entire process is designed to minimize human contact and improve speed, accuracy, and efficiency.

## Description

### CROSS-REFERENCE TO RELATED APPLICATIONS

This application claims the benefit of U.S. NonProvisional Application No, 19/403,383 filed on November 28, 2025, and U.S. Provisional Application No. 63/782,109 filed on April 2, 2025. The above-identified patent application is herein incorporated by reference in its entirety to provide continuity of disclosure.

### BACKGROUND OF THE INVENTION

Technology is always advancing, and it has done so rapidly over the last several decades. Technology has become more sophisticated, smaller, and accessible worldwide. This has led to technology becoming integral in everyday life. As with any integral element of life, the demand is high. This high demand has driven up the cost of technological devices.

In addition to high demand, replacing devices can be expensive. If one merely discards older or minor-defect equipment for a brand-new piece, the cost can escalate quickly. If, however, technology is upgraded or repaired, this process can be much more cost-effective for both the company and consumer.

Currently, to repair, repurpose, or resell many electronic devices, they need to be functionally tested. In many instances, this leads to the need to have many different human interactions. In some cases, the tests are also subjective, requiring a tester to perform the same action correctly for each test. Each time a user handles a device, there is an increased risk of reducing its value. However, in many instances, accurately tested phones have a significant upside.

Many companies have been adopting the repair instead of discard philosophy. Further, many consumers are happy to purchase a lightly used and repaired device rather than a brand-new one. However, these processes come with new challenges to remain effective. Consequently, there is always a need for improvement in the art.

### SUMMARY OF THE INVENTION

The present invention provides an electronic device logistics and testing apparatus that delivers speed, accuracy, and efficiency to an electronic device testing operation without the need for repeated human touchpoints, as set out in the appended claims. The system for automated logistics and testing of electronic devices includes a system entrance configured to receive electronic devices. A dynamic routing table operably coupled to the system entrance and configured to direct electronic devices to one or more processing stations. A pre-grade station configured to capture images of the electronic device and assess for major defects. A memory wipe station configured to erase data and update system software on the electronic device. A cleaning station configured to remove debris and prior labels from the electronic device. A labeling station configured to apply a new label to the electronic device. A grading station configured to evaluate the condition of the electronic device based on captured images. A functional testing station configured to test one or more components of the electronic device, including the screen, buttons, speakers, microphones, and cameras. An exit preparation station configured to remove a connector dongle from the electronic device. An exit station configured to organize and remove the electronic device from the system.

Another object of the system for automated logistics and testing of electronic devices is to configure the dynamic routing table to send and receive electronic devices from each station via a conveyor system.

Another object of the system for automated logistics and testing of electronic devices is to have the pre-grade station include a first conveyor with a first camera positioned above. A flipping mechanism configured to rotate the electronic device. A second conveyor with a second camera positioned above. A logic module configured to analyze images for major defects.

Another object of the system for automated logistics and testing of electronic devices is to include a flipping mechanism with an actuator and a fixture with an opening sized to receive the electronic device.

Another object of the system for automated logistics and testing of electronic devices is to have the labeling station include a first conveyor with a centering apparatus. A sensor configured to stop the device for label application-a label printing machine positioned below the conveyor. An actuator configured to extend through a gap in the conveyor and apply the label.

Another object of the system for automated logistics and testing of electronic devices is to configure the grading station to evaluate surface defects using image analysis and to assign a condition score.

Another object of the system for automated logistics and testing of electronic devices is to configure the functional testing station to execute software-based tests for touch sensitivity, audio output, microphone input, camera functionality, and button response.

Another object of the system for automated logistics and testing of electronic devices is to have the exit preparation station include a dongle-removal mechanism configured to extract a dongle from the charging port of the electronic device without human intervention.

Another object of the system for automated logistics and testing of electronic devices is to have the exit station comprise a binning system configured to sort electronic devices based on test results or destination criteria.

Another object of the system for automated logistics and testing of electronic devices is to have each station operably connected to a central computing system configured to log device status, test results, and routing decisions

Other objects, features, and advantages of the present invention will become apparent from the following detailed description taken in conjunction with the accompanying drawings.

### BRIEF DESCRIPTION OF THE DRAWINGS

The accompanying drawings are incorporated in and are to be considered part of the present specification. These drawings are intended to aid the reader's understanding and comprehension of the present disclosure and depict various example embodiments. The drawings are not to be considered limiting upon the disclosure. It should specifically be noted that the drawings are examples and may not necessarily be drawn to scale.
FIG. 1 shows a block diagram of a computing system.
FIG. 2A shows a front view of an example of a mobile phone device.
FIG. 2B shows a rear view of an example of a mobile phone device.
FIG. 3 shows a chart for an embodiment of the layout for a system of electronic device logistics and testing.
FIG. 3A shows a perspective view of an embodiment of a system for pre-grading an electronic device.
FIG. 3B shows a perspective view of an embodiment of a system for labeling an electronic device.
FIG. 4 shows a flow chart of an embodiment of a method for using the system for electronic device logistics and testing.

### DETAILED DESCRIPTION OF THE INVENTION

For the purposes of presenting a brief and clear description of the present invention, a preferred embodiment will be discussed as used for the electronic device logistics and testing apparatus. The figures are intended for representative purposes only and should not be considered to be limiting in any respect.

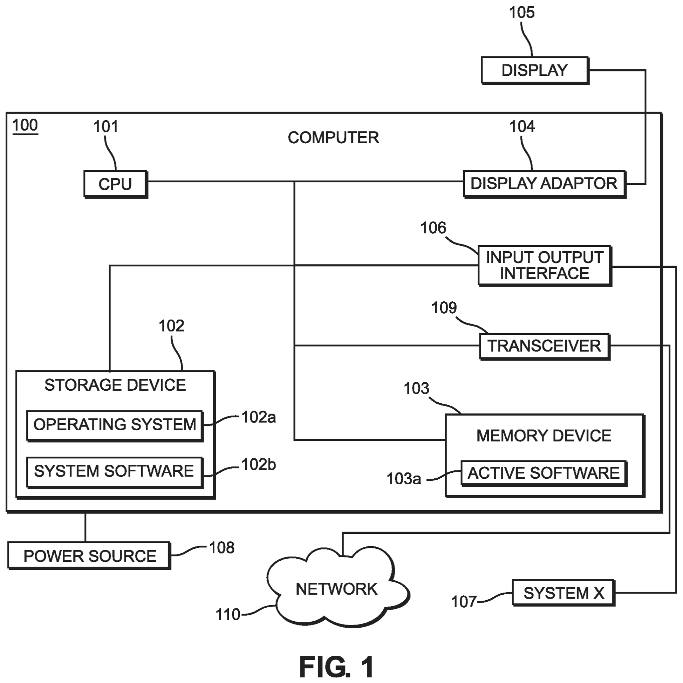

Referring now to FIG. 1, there is shown a block diagram of a computing system. Computing systems may have many interchangeable parts or multiples of some parts. One of ordinary skill in the art will understand that the shown computer 100 is a basic computing system that demonstrates a minimal number of parts to allow it to function. Computer 100 is exemplary, and one of ordinary skill in the art will recognize that computer 100 may be altered as necessary to render the presently disclosed system operable or to provide a peak performance of the disclosed system.

The parts described are each operably coupled together as necessary; one of ordinary skill in the art will understand how to connect general computer components, for example, using a motherboard or other computer board. In the shown embodiment, the computer 100 includes a CPU 101. In one embodiment, the CPU 101 includes only one processor. In other embodiments, the CPU 101 may comprise multiple processors. Different processors offer different levels of computing power and speed.

The computer 100 includes at least one storage device 102. In different embodiments, the at least one storage device 102 may be a solid-state storage device, a disk storage device, or another suitable storage device. One of ordinary skill in the art will recognize that there are several types of computing storage devices, each providing well-known benefits and drawbacks. The at least one storage device 102 will store at least the computer operating system 102a and system software 102b. System software 102b may include any software necessary, or optionally, used to run any system described herein.

Computer 100 will include at least one memory device 103. One of ordinary skill in the art will recognize that there are several types of computing memory devices, each providing well-known benefits and drawbacks. The at least one memory device 103 will store at any active software 103a. Active software 103a may include the operating system 102a or parts of the system software 102b. The at least one memory device 103 may store the entire system software 102b size and speed permitting.

The computer 100 may also include various connection ports and types. The computer 100 may have a display adaptor 104. The display adaptor 104 will allow the computer 100 to connect to at least one display 105. In other embodiments, multiple displays may be connected to the display adaptor 104. Similarly, the computer 100 may include at least one input/output interface 106. The input/output interface 106 will allow the computer 100 to connect to at least one system, referred to as System X 107 in FIG. 1. The input/output interface 106 may also allow connection to only part of System X 107 or to multiple systems. The computer 100 will also be operably connected to a required power source 108.

The computer 100 may also include a transceiver 109. In one embodiment, the transceiver 109 is wired. In another embodiment, the transceiver 109 is a wireless transceiver. The transceiver 109 will allow the computer 100 to connect to a network 110. The network 110 may be an internet or an intranet connection. The network 110 will allow the computer 100 to connect to multiple other computing devices, potentially. In another embodiment, the network may allow the computer 100 to connect to various systems. In one embodiment, the computer 100 allows System X 107 to be connected to the network 110.

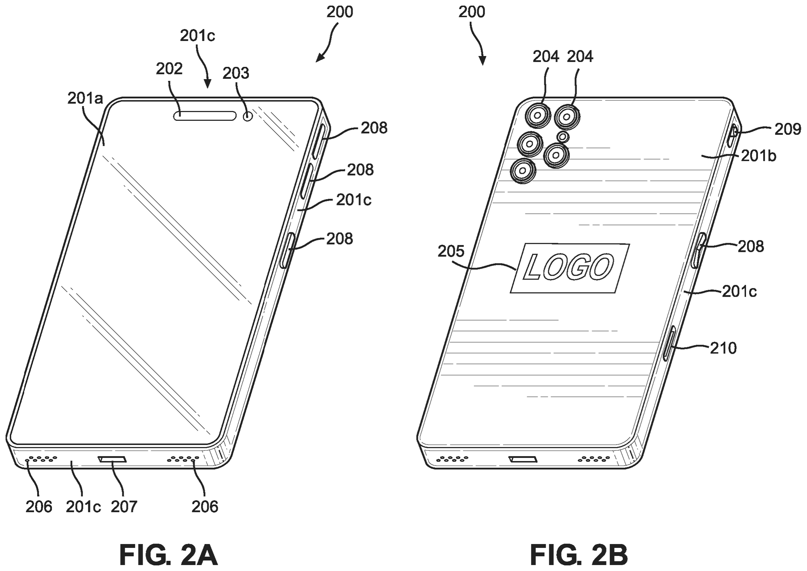

Referring now to FIG. 2A and FIG. 2B, there is shown a front view and a rear view of an example of an electronic device 200, such as a mobile phone device. Electronic devices may have many components. Even like parts or components may be in various locations or have different shapes and sizes. One of ordinary skill in the art will understand that the shown electronic device 200 is merely an example of the exterior of a device. Any specialized or specific features or requirements of devices will be detailed herein as necessary. However, one of ordinary skill in the art will understand that many electronic devices 200 have many of these described characteristics. Further, electronic devices, such as mobile phones, operate on a computer-based platform that includes many of the components described in FIG. 1. The following description details the external components and not the computer that runs the electronic device 200. The electronic device 200 can be, without limitation, a mobile phone device or a tablet. In one embodiment, other electronic devices may be used, such as laptops, cable set-top boxes, routers, or antennas.

The shown electronic device 200 includes a front surface 201a, a rear surface 201b, and four side surfaces 201c. The front surface 201a typically includes a screen that covers a majority of the surface. The screen is generally covered with a specialized material, currently a glass product. The front surface 201a may also include a speaker opening 202 and a camera opening 203.

The rear surface 201b of the electronic device 200 may include at least one camera lens 204. In the shown embodiment, there are a plurality of camera lenses 204. In another embodiment, at least one light lens is secured to the rear surface 201b. In many embodiments, the rear surface 201b includes a logo 205. The logo 205 may represent the company that created the electronic device 200. The rear surface 201b may include a coating or covering to decorate or protect the rear surface. For example, a coating may be applied to the rear surface 201b to ensure a shiny surface.

The side surfaces 201c of the electronic device 200 may include any or all of the following parts. In one embodiment, the electronic device 200 will have several openings for speaker output 206. The electronic device 200 will also include a charging port 207. Charging ports 207 may include a prong therein to secure to a charging cord. An electronic device 200 may include a plurality of buttons 208 along the side surfaces 201c. In different embodiments, the plurality of buttons 208 may provide volume control, lock the electronic device 200, or perform other desired functions. In some embodiments, the electronic device 200 may include a switch 209. In yet another embodiment, the electronic device 200 includes a SIM card slot or other card slot 210.

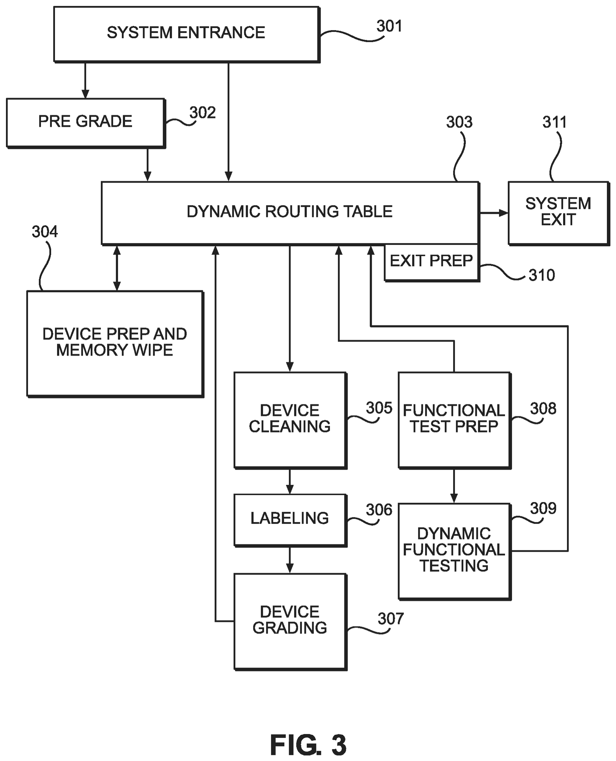

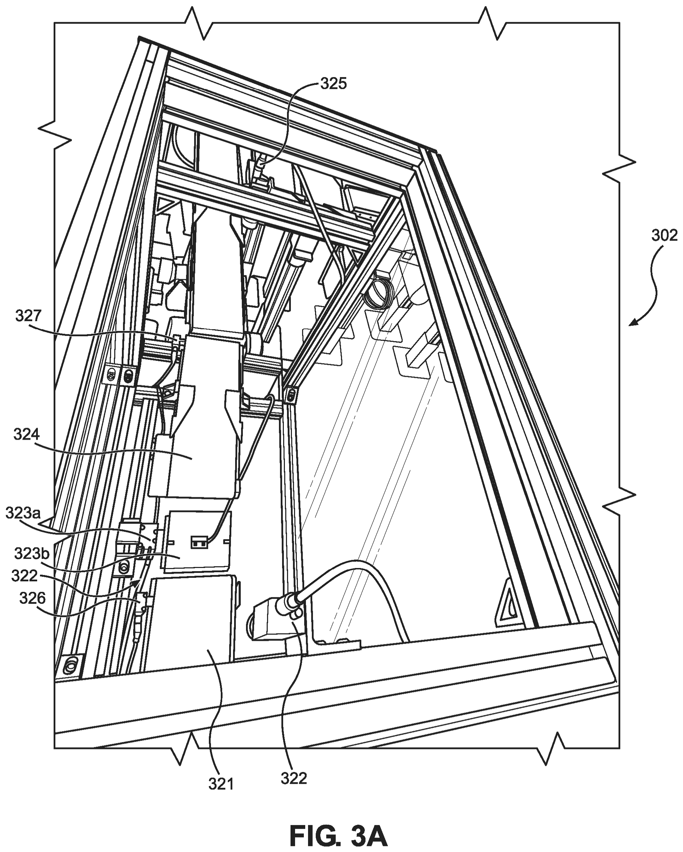

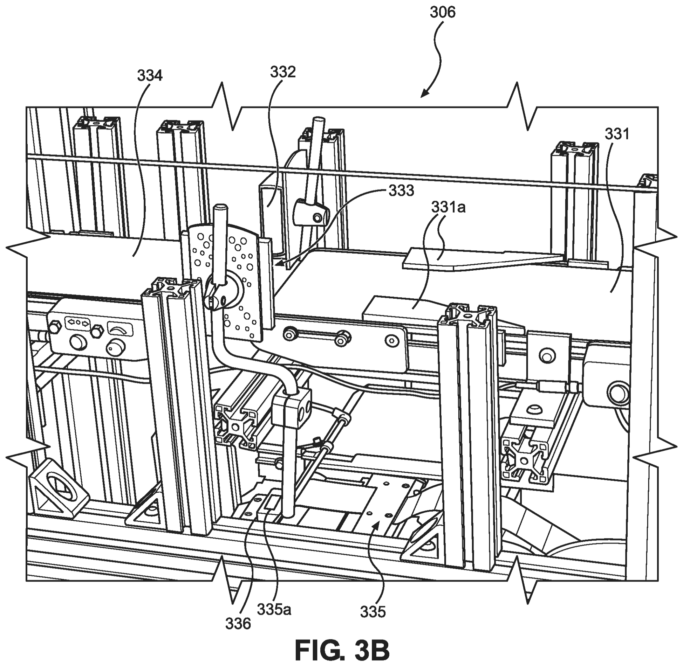

Referring now to FIG. 3, there is shown a chart for an embodiment of the layout for the system of electronic device logistics and testing. The system herein described provides for only limited human touchpoints on electronic devices to be manipulated. Thus, in most embodiments, at most, humans need to come into contact with electronic devices in only three instances. This limits damages and significantly improves the throughput of electronic devices.

First, unpackaging devices received from consumers and placing them in the system. In one embodiment, this could mean putting the electronic device in a bin. In some embodiments, an initial scannable code will be placed on the electronic device to allow the system to register the device's intake. Second, when repacking devices for either consumer shipment or mass shipment. Third, in the event of either scrapping or repair. In either case, human touch is necessary.

The system has a system entrance 301. An example of embodiments of the system entrance can be seen and is detailed in U.S. Patent Application No. 19/403,372, titled Electronic Device Bin Removal System, which is herein incorporated by reference. However, simpler ways to enter the system can be used. For example, in one embodiment, an electronic device can be placed on a conveyor and taken into the system. In another embodiment, electronic devices can be placed directly on a dynamic routing table 303. An example of embodiments of the dynamic routing table can be seen and detailed in U.S. Patent Application No. 18/956,080, titled Method of Logistics Planning Using Specialized Equipment, which is herein incorporated by reference.

In one embodiment, a pre-grade station or process 302 is coupled to the system after the system entrance 301. The pre-grade 302 can be used to determine whether an electronic device, for example, has a cracked screen or other significant damage that would preclude it from completing various steps in the system. The pre-grade 302 will be further discussed in the description of FIG. 3A.

From now on, in this description of the electronic device logistics system, the stations, steps, and connections are presented in an order that the Applicant believes provides an effective path through the system. However, the system may be traversed in any order without departing from the described invention. In any path forward, electronic devices are put through various tests and grading as needed by a user.

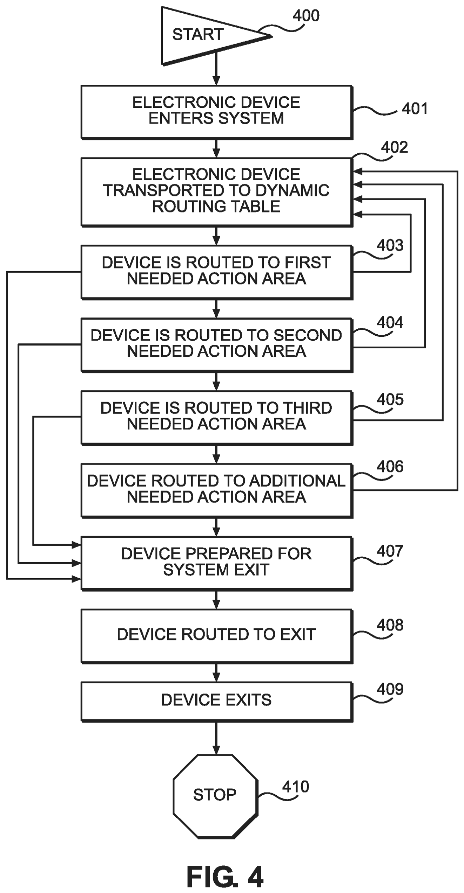

After an electronic device enters the logistics system, its path through the system can be determined using the method described in FIG. 4. After the system entrance 301, or in embodiments including the pre-grade station 302, a dynamic routing table 303 is added to the system. The dynamic routing table can then be connected to various systems and can send electronic devices to desired systems or system loops. In one embodiment, a system for preparing the electronic device for official intake, memory wiping, and system updating 304 is secured to the dynamic routing table 303. An example of such a system can be seen and is detailed in U.S. Patent Application No. 19/321,537, titled Apparatus and Methods for Automatically Removing Data of Mobile Devices, as well as the parent United States Patents 12,436,758, 12,293,181, 12,099,831, each of which is herein incorporated by reference. After memory wipe station 304, the system can then loop back and connect to the dynamic routing table 303. In one embodiment, a first track is used to send the electronic device to the memory wipe system 304, and a second is used to return the electronic device to the dynamic routing table 303. In another embodiment, a single track is used for both sending and receiving signals to and from the electronic device.

In a further embodiment, a loop is connected to the dynamic routing table 303, which will clean, re-label, and grade the device. In one embodiment, the loop includes a cleaning station 305, such as a system detailed in U.S. Patent Application No. 18/499,861, titled "System and Method for Cleaning Mobile Devices," which is herein incorporated by reference. In another embodiment, a dry ice spray can be used as the cleaning station 305. An example of a system that cleans devices in this way is described in U.S. Patent Application No. 18/657,073, titled System and Method for Cleaning an Electronic Device with Dry Ice, which is herein incorporated by reference.

In some embodiments, the cleaning process will remove a label applied to the exterior of the electronic device. Therefore, an automatic labeling device 306 will be included in the loop. An embodiment of a labeling device 306 is described in the description of FIG. 3B. After the cleaning station 305 and labeling device 306, a grading station 307 is added to the loop. In general, device grading in this automated fashion can be done via pictures taken of the device. However, for example, a system of grading can be seen and is detailed in U.S. Patent Application No. 17/955,837, titled Methods and Systems for Grading Devices, which is herein incorporated by reference. The loop can then return to the dynamic routing table 303. In other embodiments, each station can be attached to the dynamic routing table separately, and devices can be sent to and from the stations as desired by the user.

The electronic device can then be functionally tested within the automated electronic device logistics system. In one embodiment, a further device preparation step must be performed. In this embodiment, a system to prepare electronic devices for testing 308 is connected to the dynamic routing table 303. Such a system can be similar to that of the device memory wipe station 304. However, software can thus be uploaded to the device as described and detailed in U.S. Patent Application No. 18/062,664, titled System and Method for Clearing Data and Installing Firmware on a Plurality of Computer Devices Simultaneously, which is herein incorporated by reference.

In one embodiment, after the system prepares electronic devices for testing 308, the system can route back to the dynamic routing table. In another embodiment, the system can route directly to a dynamic functional testing station 309. Functional testing of an electronic device can include: screen touch testing, speaker testing, microphone testing, camera testing, button testing, and other tests as deemed appropriate by the user. An example of such a dynamic testing station 309 can be seen and is detailed in U.S. Patent Application No.19/403,368, titled Electronic Device Logistics And Testing System, which is herein incorporated by reference.

After the dynamic testing station 309, the system can route an electronic device back to the dynamic routing table 303. The electronic device can, in one embodiment, then enter an exit prep station 310 before exiting the table. In one embodiment, the exit prep station 310 is secured to the dynamic routing table. In another embodiment, the exit prep station 310 is routed to and then routed back to the dynamic routing table. In one embodiment, a specialized dongle is placed in the charging port of the electronic device. This will allow the device to connect to various systems and stations described herein properly. In this embodiment, the exit prep station 310 can be used to remove this dongle. In this embodiment, a specialized system can remove the dongle from the device without human intervention. An example of such a system can be seen and is be seen and is detailed in U.S. Patent Application No. 19/403,366, titled Electronic Device Dongle Removal System, which is herein incorporated by reference.

In one embodiment, the dynamic routing table is routed to an exit station 311. In one embodiment, the exit station could be a simple conveyor. In another embodiment, the electronic device can merely be removed from the system by hand. In yet a further embodiment, the exit system can be used to organize and place electronic devices in bins. An example of such a system can be seen and is detailed in U.S. Patent Application No. 19/403,373, titled Electronic Device Sort And Bin System, which is herein incorporated by reference. The use of such a system can reduce human touchpoints and simplify the removal of electronic devices.

Referring now to FIG. 3A, there is shown a perspective view of an embodiment of a system for pre-grading an electronic device. In one embodiment, the pre-grading of an electronic device includes taking a picture of the front and back of the electronic device. These pictures can then be used to determine if there are any major imperfections with the electronic device. In this manner, the pre-grading system 302 will not receive a highly detailed grade, but can help the overall system determine whether steps in the system can or should be skipped.

In one embodiment, the pre-grading system includes a first conveyor 321. Above the first conveyor, a first camera 322 is positioned. An electronic device can enter via the first conveyor 321, and the first camera 322 can take at least one picture of the electronic device. At the end of the first conveyor, 321 is a device with a flipping mechanism 323. The flipping mechanism can be taken from a first side and placed on a second side on a second conveyor 324.

The flipping mechanism 323 can include an actuator 323a. The actuator 323a is connected to a fixture 323b having an opening therein. The opening can accept an electronic device therein. This will allow the first conveyor 321 to move the electronic device therein, flip the device, and the second conveyor 324 to pull the device from the flipper.

A second camera 325 is placed over the second conveyor 324. An electronic device can enter the second conveyor 324, and the second camera 325 can take at least one picture of the electronic device. In this manner, the front and back sides of the electronic device have been captured. A logic stored on a computer-readable medium can then be used to determine if any major flaws exist on the device.

In some embodiments, a first sensor 326 is placed adjacent to the first conveyor 321 under the first camera 322. The first sensor 326 can trigger the first conveyor 321 to stop, ensuring accurate pictures are taken. In other embodiments, a second sensor 327 is placed adjacent to the second conveyor 324 under the second camera 325. The second sensor 327 can trigger the second conveyor 324 to stop, ensuring accurate pictures are taken.

Referring now to FIG. 3B, there is shown a perspective view of an embodiment of a system for labeling an electronic device. Labeling system 306 can include a first conveyor 331. In one embodiment, the first conveyor 331 can include a centering apparatus 331a. A sensor 332 is placed at the end of the first conveyor 331. The sensor 332 can be used to stop the device and have the label 335a applied. The first conveyor 331 has a short gap 333 before a second conveyor 334 is placed.

A label printing machine 335 is placed below the first conveyor 331 and the second conveyor 334. The label printing machine 335 is configured to print labels that can be stuck to an electronic device. In one embodiment, the label printing machine 335 deposits labels 335a onto an actuator 336. The actuator is proportioned such that it can extend through the gap 333 and place the label 335a on the electronic device. The second conveyor 334 can convey the electronic device onward after the label 335a is placed.

Referring now to FIG. 4, there is shown a flow chart of an embodiment of a method for using the system for electronic device logistics and testing. In different embodiments, start 400 involves an electronic device entering the system 401. The electronic device can then be transported to a dynamic routing table 402. From the electronic device routing table 402, an electronic device can be transported to a first needed action area 403.

After the first action area 403, the electronic device can be transported back to the dynamic routing table 402. In another embodiment, the electronic device can be transported to the second action area 404. In yet a further embodiment, the electronic device can be prepared for system exit 407. The device can then be routed to exit 408 and exit the system 409. In this embodiment, the method then ends at 410.

After the second action area 404, the electronic device can be transported back to the dynamic routing table 402. In another embodiment, the electronic device can be transported to the third action area 405. In yet a further embodiment, the electronic device can be prepared for system exit 407. The device can then be routed to exit 408 and exit the system 409. In this embodiment, the method then ends at 410.

After the third action area 405, the electronic device can be transported back to the dynamic routing table 402. In another embodiment, the electronic device can be transported to another needed action area 406. In yet a further embodiment, the electronic device can be prepared for system exit 407. The device can then be routed to exit 408 and exit the system 409. In this embodiment, the method then ends at 410.

It is therefore submitted that the methods, systems, and devices have been shown and described in what is considered the most practical and preferred embodiments, along with specific examples. It is recognized, however, that departures may be made within the scope, and these present examples are not intended to be limiting. One of ordinary skill the art will be able to discern that obvious modifications can be made without departing from the scope or spirit.

With respect to the above description then, it is to be realized that the optimum dimensional relationships for the parts of the invention, to include variations in size, materials, shape, form, function and manner of operation, assembly and use, are deemed readily apparent and obvious to one skilled in the art, and all equivalent relationships to those illustrated in the drawings and described in the specification are intended to be encompassed by the present invention. Similarly, it is to be realized that it is not designed for any method set forth herein to be construed as requiring that its steps be performed in a specific order, unless otherwise set forth in the claims.

Therefore, the foregoing is considered as illustrative only of the principles of the disclosure. Further, since numerous modifications and changes will readily occur to those skilled in the art, it is not desired to limit the invention to the exact construction and operation shown and described, and accordingly, all suitable modifications and equivalents may be resorted to, are deemed to fall within.

## Claims

1. A system for automated logistics and testing of electronic devices, comprising:
a system entrance configured to receive electronic devices;
a dynamic routing table operably coupled to the system entrance and configured to direct electronic devices to one or more processing stations;
a pre-grade station configured to capture images of the electronic device and assess for major defects;
a memory wipe station configured to erase data and update system software on the electronic device;
a cleaning station configured to remove debris and prior labels from the electronic device;
a labeling station configured to apply a new label to the electronic device;
a grading station configured to evaluate the condition of the electronic device based on captured images;
a functional testing station configured to test one or more components of the electronic device, including screen, buttons, speakers, microphones, and cameras;
an exit preparation station configured to remove a connector dongle from the electronic device; and
an exit station configured to organize and remove the electronic device from the system.

2. The system of claim 1, wherein the dynamic routing table is configured to send and receive electronic devices from each station via a conveyor system.

3. The system of claim 1 or 2, wherein the pre-grade station comprises:
a first conveyor with a first camera positioned above;
a flipping mechanism configured to rotate the electronic device;
a second conveyor with a second camera positioned above; and
a logic module configured to analyze images for major defects.

4. The system of claim 3, wherein the flipping mechanism comprises an actuator and a fixture with an opening sized to receive the electronic device.

5. The system of any preceding claim , wherein the labeling station comprises:
a first conveyor with a centering apparatus;
a sensor configured to stop the device for label application;
a label printing machine positioned below the conveyor; and
an actuator configured to extend through a gap in the conveyor and apply the label.

6. The system of any preceding claim, wherein the grading station is configured to evaluate surface defects using image analysis and assign a condition score.

7. The system of any preceding claim, wherein the functional testing station is configured to execute software-based tests for touch sensitivity, audio output, microphone input, camera functionality, and button response.

8. The system of any preceding claim, wherein the exit preparation station includes a dongle removal mechanism configured to extract a connector from the charging port of the electronic device without human intervention.

9. The system of any preceding claim, wherein the exit station comprises a binning system configured to sort electronic devices based on test results or destination criteria.

10. The system of any preceding claim, wherein each station is operably connected to a central computing system configured to log device status, test results, and routing decisions.
